# EUROPEAN PATENT APPLICATION

(11) **EP 4 019 212 A1**
(43) Date of publication of application: **29.06.2022**
(21) Application number: 21215505.5
(22) Date of filing: 17.12.2021
(51) Int. Cl.: B25J 19/02, B25J 15/08

(54) **GRIPPER JAW SENSOR**

(30) Priority: 23.12.2020 US 202017132990
(71) Applicant: Delaware Capital Formation, Inc., Wilmington, Delaware 19809 (US)
(72) Inventor: GEARY, James, Pawcatuck, 06379 (US); BETTAIAH, Shashikumar, 560093 Bangalore (IN)
(74) Representative: Staeger & Sperling Partnerschaftsgesellschaft mbB

(57) **Abstract**

A gripper has a body with an actuation member and at least one jaw coupled to the body and the actuation member to move the at least jaw between a first and second position. A gripper tip on the at least one jaw. A sensor assembly includes a housing with a sensor mounted into the housing. The housing is secured in the gripper tip and secures the gripper tip to the at least one jaw.

## Description

### FIELD

The present disclosure relates to grippers and, more particularly, to a sensor in the jaw gripper tip.

### BACKGROUND

Various types of grippers exist in the field. Grippers are generally hydraulic or pneumatically operated. All of the grippers are utilized to grasp workpieces between their jaws. It is desirable when grasping the workpiece that the jaws, at their gripper tips, are able to determine or sense the existence of a workpiece between the pair of jaws. Thus, various types of designs exist that include sensors to sense the presence of the workpiece between the jaws. These systems include various sensors that may be positioned adjacent to the jaw to enable the gripper to grasp the workpiece to accomplish the programmed opening.

Most of the sensors are positioned in housings that are attached to the gripper body. Some sensors are secured to a pad to provide the sensing feature. While these sensors work satisfactorily to sense the workpiece, designers strive to improve the art. Accordingly, it would be desirable to have a sensor that is integrated into the jaw gripper tip.

### SUMMARY

According to the present disclosure, a sensor assembly is mounted with a gripper tip and secured to the jaw. The sensor assembly may include an arrangement to secure the sensor assembly to the gripper tip as well as to secure the gripper tip with the jaw.

According to a first embodiment of the disclosure, a gripper comprises a body including an actuation member. At least one jaw is coupled with the body and the actuation member to move the at least one jaw between a first and second position. A gripper tip is on the at least one jaw. A sensor assembly includes a housing and a sensor mounted into the housing. The housing is secured in the gripper tip and secures the gripper tip to the at least one jaw. The sensor housing includes threads to secure with a thread bore in the jaw. The gripper tip includes a counterbore to receive a head of the housing. The gripper includes a pair of jaws and a pair of gripper tips. One of the gripper tips includes the sensor assembly housing. The other gripper tip includes a recess aligned with a tapered sensing zone generated by the sensor.

According to a second embodiment of the disclosure, a gripper tip comprises a body having an aperture. A sensor assembly is secured in the aperture. The sensor assembly includes a housing with a sensor mounted in the housing. The housing is secured with the gripper tip and is capable of securing the gripper tip with a jaw. Generally, the housing includes threads engaging with threads of the aperture to retain the housing on the gripper tip. The gripper tip includes a counterbore to receive the head of the housing. A second gripper tip may oppose the first gripper tip. The second gripper tip includes a recess aligned with the tapered sensing zone of the sensor.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.

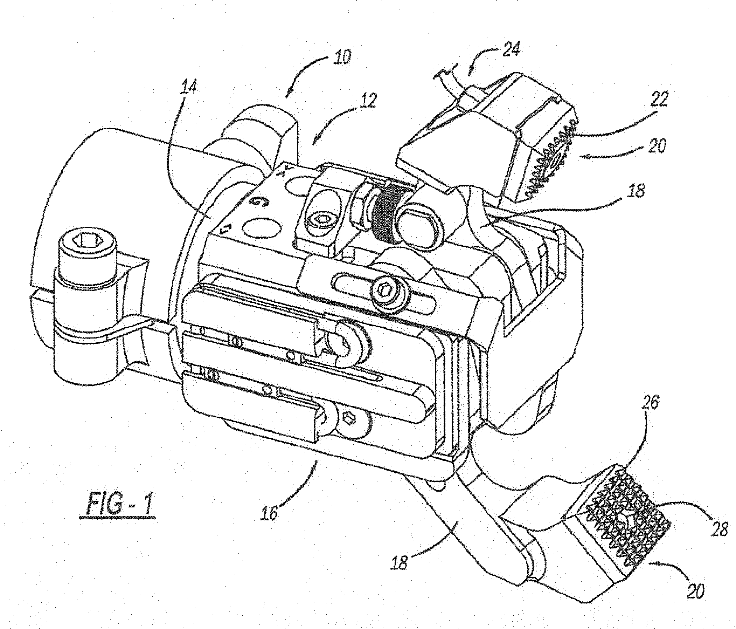

FIG. 1 is a perspective view of a gripper.

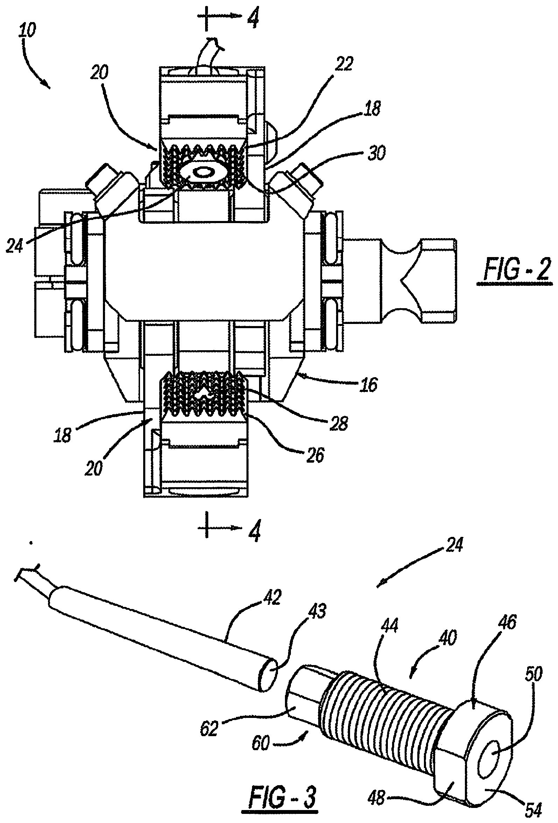

FIG. 2 is a front elevation view partially in perspective of the gripper of FIG. 1.
FIG. 3 is an exploded perspective view of the sensor perspective view.

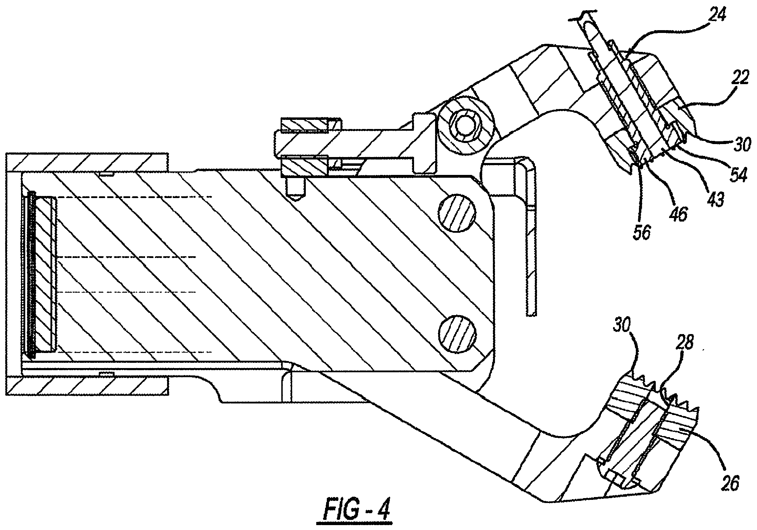

FIG. 4 is a cross-section view of the gripper tip on the jaw.
FIG. 5 is an enlarged cross-sectional view of the jaws in a clamping position.
FIG. 6 is a view like FIG. 5 with a workpiece between the jaws.

### DETAILED DESCRIPTION

Example embodiments will now be described more fully with reference to the accompanying drawings.

Turning to the figures, a gripper is illustrated and designated with the reference numeral 10. The gripper includes a body 12 with a cylindrical portion 14 and a clevis portion 16. The cylindrical portion 14 includes the activation member generally including a piston with a rod for actuating the jaws 18. As shown, the jaws 18 include two movable jaws. However, one of the jaws could both be stationary.

A gripper tip 20 is secured to the jaws 18. The upper gripper tip 22 includes a sensor assembly 24. Lower gripper tip 26 includes a recess 28.

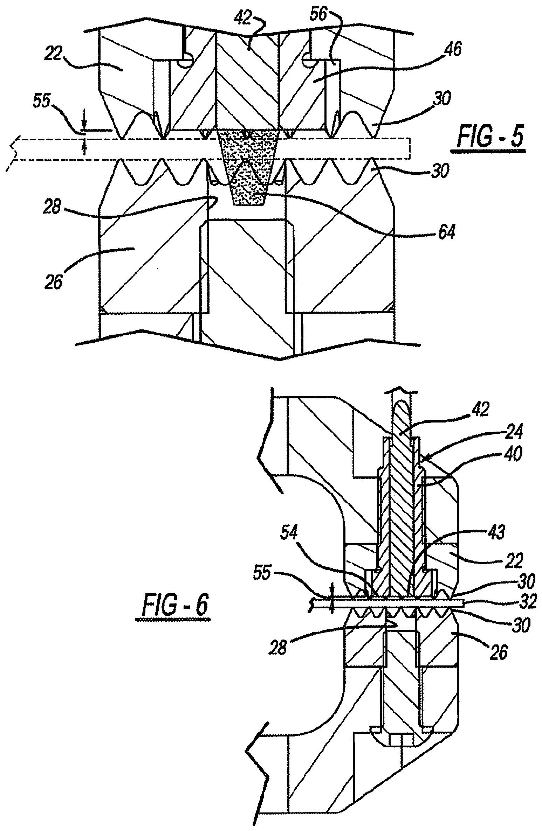

The gripper tips 20, 22 include teeth 30 that grasp or hold the workpiece or blank 32 between the gripper tips 22 as illustrated in FIG. 6. The sensor assembly 24 senses aluminum and steel blanks or workpieces positioned between the gripper tips 20.

The upper gripper tip 22 includes a through bore 34 to receive the sensor assembly 24. The sensor assembly 24 includes a housing 40 and a sensor 42. The housing 40 has a threaded body 44 with a head 46 and tail 60. The head 46 includes a pair or more of flat surfaces 48 to enable a wrench to fit onto the head 46 for threading the housing through the gripper tip 22 and into jaw 18. Likewise, the tail 60 includes wrench surfaces 62 to enable continued threading until the head seats in the countersink bore 56. The sensor 42 is adhered inside a bore 50 in the housing 40. The tip 43 of the sensor 42 is flushed with the front surface 54 of the head 46.

The sensor 42 is an inductive sensor and may be glued or adhered into the threaded housing 40. The face 43 of the sensor 42 is flush with the face 54 of the housing 40. The inductive sensor 42 is tuned to sense a sheet of aluminum as thin as 0.5mm. It will also sense thicker sheets. However, the sensor cannot be so sensitive as to sense the opposing jaw tip 26 if the gripper closes without a sheet or workpiece 32 between the gripper tips 20.

The housing 40 acts as both a screw to hold the gripper tip 22 into the jaw 18 and as a housing 40 for the sensor 42. The sensor 42 is located flush in the steel housing to shield the sensor inductively.

The upper gripper tip 22 includes a countersink bore 56. The countersink bore 56 enables the housing head 46 to be positioned with respect to the teeth 30 so that a gap 55 is formed between the teeth 30 and the face 54 of the housing 40 and sensor 42. The gap 55 is between the face of the sensor 42 and the sheet 32 to be sensed. This protects the sensor 42 from contacting the sheet 32.

The bottom or lower tip 26 includes the recess 28. The sensor 42 has a tapered sensing zone 64 that extends from the face of the sensor 42. This is illustrated in FIG. 5. The sensor 42 has the ability to sense metallic objects in the zone. The recess 28 in the bottom tip 26 is present in case a sheet 32 is missing. Thus, the sensor will not detect the lower tip 26 and confuse it for a sheet 32.

The jaws 18 are positioned in a gripping position as illustrated in FIG. 6. Here, the metal sheet 32 or workpiece is positioned between the two tips . The sensor 42 senses the sheet 32 to enable the gripper 10 to conduct its operation. The sensor is capable of sensing both aluminum or steel sheets down to a thickness of 0.5mm. Additionally, the sensor 42 is capable of sensing a double sheet material. Thus, this occurs with the sensor housing threaded into the jaw 18 to hold the gripper tip 20 onto the jaw 18.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A gripper comprising:
a body including an actuation member;
at least one jaw coupled with the body and the actuation member for moving the at least one jaw between an first and second position;
a gripper tip on the at least one jaw; and
a sensor assembly, including a housing with a sensor mounted into the housing, the housing is secured in the gripper tip and secures the gripper tip to the at least one jaw.

2. The gripper of Claim 1, wherein the sensor housing includes threads.

3. The gripper of Claim 1, wherein the gripper tip includes a countersink bore to receive a head of the housing.

4. The gripper of Claim 1, wherein the gripper includes a pair of jaws and a pair of gripper tips.

5. The gripper of Claim 4, wherein a first gripper tip includes a countersink bore sink to receive a head of the housing.

6. The gripper of Claim 5, wherein the sensor has a tapered sensing zone.

7. The gripper of Claim 6, wherein the second gripper tip includes a recess aligned with the sensing zone.

8. A gripper tip comprising:
a body having an aperture and a sensor assembly; and
the sensor assembly including a housing with a sensor mounted in the housing, the housing secured in the gripper tip and for securing the gripper tip to a jaw.

9. The gripper tip of Claim 8, wherein the sensor housing includes threads.

10. The gripper tip of Claim 8, wherein the gripper tip includes a countersink bore to receive a head of the housing.

11. The gripper tip of Claim 8, wherein the sensor has a tapered sensing zone.

12. The gripper tip of Claim 11, further comprising a second gripper tip for opposing the first gripper tip, the second gripper tip includes a recess aligned with the sensing zone.
